# EUROPÄISCHE PATENTANMELDUNG

(11) **EP 4 261 994 A1**
(43) Veröffentlichungstag der Anmeldung: **18.10.2023**
(21) Anmeldenummer: 23165079.7
(22) Anmeldetag: 29.03.2023
(51) Int. Cl.: H01M 50/209, H01M 50/242, H01M 50/289

(54) **VORRICHTUNG ZUR DRUCKENTLASTUNG FÜR EINEN BATTERIEZELLENSTAPEL**

(30) Priorität: 14.04.2022 DE 102022109173
(71) Anmelder: MAN Truck & Bus SE, 80995 München (DE)
(72) Erfinder: Hirschmann, Steffen, 80995 München (DE); Dietrich, Jens, 80995 München (DE)
(74) Vertreter: v. Bezold & Partner Patentanwälte - PartG mbB

(57) **Zusammenfassung**

Die Erfindung betrifft eine Vorrichtung (10) zur Druckentlastung für einen Batteriezellenstapel (22) aus mehreren entlang einer Stapelrichtung (S) gestapelten Batteriezellen (24). Die Vorrichtung weist einen Grundkörper (12) und einen formflexiblen Fluidbehälter (14) auf, wobei der Fluidbehälter (14) am Grundkörper (12) angebracht ist und der mit einem Fluid (1) gefüllt ist. Die Vorrichtung (10) weist ferner eine Ausgleichskammer (16) auf, die mit dem Fluidbehälter (14) fluidisch verbunden ist und die ein von dem Fluid (1) einnehmbares Ausgleichsvolumen (16a) aufweist. Hierbei ist vorgesehen, dass das Ausgleichsvolumen (16a) zur Anpassung eines Drucks des Fluids (1) im Fluidbehälter (14) veränderbar ist.

## Beschreibung

Die Erfindung betrifft eine Vorrichtung zur Druckentlastung für einen Batteriezellenstapel sowie ein Batteriemodul mit einer ebensolchen Vorrichtung.

Es ist bekannt, dass das Volumen von Batteriezellen, insbesondere Lithium-Ionen-Batteriezellen, im entladenen Zustand kleiner sein kann als im geladenen Zustand. Diese im Wesentlichen reversible Volumenänderung wird im Stand der Technik oft als "breathing" bezeichnet. Weiterhin ist bekannt, dass bei Batteriezellen das Batteriezellenvolumen mit zunehmender Anzahl an Lade- bzw. Entladezyklen zunehmen kann. Dieser irreversible Effekt wird im Stand der Technik zumeist als "swelling" bezeichnet.

Werden mehrere Batteriezellen zu einem Batteriezellenstapel bzw. einem Batteriezellenmodul verspannt, z. B. innerhalb eines Spannrahmens, können durch ein "swellen" der Batteriezellen starke mechanische Belastungen bzw. Verformungen, z. B. am Rahmen und/oder den Kontakten, auftreten. Weiterhin können auch die Batteriezellen zerstört werden, z. B. durch ein Herauspressen des Elektrolyten infolge einer zu hohen Druckbelastung.

Zur Vermeidung dieser unerwünschten Effekte können nachgiebige Kompensations- bzw. Ausgleichselemente (z. B. in Form von Schaumstoffelementen und/oder Wellblechelementen) zwischen den Batteriezellen angeordnet werden, um eine Volumenzunahme der Batteriezellen im vorgegebenen Bauraum zu ermöglichen. Nachteilig an den bekannten Lösungen ist jedoch oftmals ein hoher Platzbedarf und/oder eine ungleichmäßige Vorspannkraft über den Verpressweg, sodass die Vorspannkraft ggf. stark abfallen oder sogar gänzlich verschwinden kann.

Entsprechend ist es eine Aufgabe der Erfindung, eine verbesserte Möglichkeit zur Reduzierung eines druckbedingten Verschleißes von Batteriezellen bereitzustellen. Vorzugsweise ist es eine Aufgabe der Erfindung, eine Lösung bereitzustellen, mittels derer die Vorspannkraft von Batteriezellen möglichst über die gesamte Lebensdauer und bei jedem Ladezustand in einem Bereich gehalten werden kann, in dem eine hohe Kapazität der Batteriezellen über viele Lade- und Entladezyklen gewährleistet ist. Bevorzugt sollte die Lösung ferner möglichst wenig Bauraum beanspruchen.

Diese Aufgaben können mit den Merkmalen der unabhängigen Ansprüche gelöst werden. Vorteilhafte Ausführungsformen und Anwendungen der Erfindung sind Gegenstand der abhängigen Ansprüche und werden in der folgenden Beschreibung unter teilweiser Bezugnahme auf die Figuren näher erläutert.

Gemäß einem ersten unabhängigen Aspekt wird eine Vorrichtung bereitgestellt. Bevorzugt dient die Vorrichtung zur Druckentlastung für einen Batteriezellenstapel aus mehreren entlang einer Stapelrichtung gestapelten Batteriezellen (z. B. Lithium-Ionen-Batteriezellen). Beispielsweise kann die Vorrichtung zur Druckentlastung bei einer swellingbedingten Ausdehnung der Batteriezellen des Batteriezellenstapels dienen. Hierzu kann Vorrichtung zur Anordnung in dem Batteriezellenstapel (z. B. zwischen zwei Batteriezellen des Batteriezellenstapels) ausgebildet sein.

Die Vorrichtung weist einen, vorzugsweise rahmenförmigen, Grundkörper auf. Der Grundkörper kann z. B. als Halterahmen ausgebildet sein.

Weiterhin weist die Vorrichtung einen formflexiblen Fluidbehälter (z. B. einen Beutel und/oder ein Kissen) auf, der am Grundkörper angebracht (z. B. angeklebt und/oder angeschweißt) ist. Der Ausdruck formflexibel kann dabei bevorzugt angeben, dass die Form des Fluidbehälters (z. B. dessen Kontur) veränderbar ist, z. B. durch eine äußere Druckbeaufschlagung. Beispielsweise kann der Fluidbehälter dazu zumindest abschnittsweise eine biegsame, dehnbare, deformierbare und/oder elastische Wandung aufweisen. Weiterhin ist der Fluidbehälter mit einem Fluid (z. B. einer dielektrischen Flüssigkeit) gefüllt. Beispielsweise kann das Fluid ein im Wesentlichen inkompressibles Medium (z. B. deionisiertes Wasser) sein. Bevorzugt ist dabei vorgesehen, dass der Fluidbehälter vollständig mit dem Fluid gefüllt ist.

Die Vorrichtung weist ferner eine Ausgleichskammer auf. Die Ausgleichskammer ist hierbei mit dem Fluidbehälter (z. B. über eine Fluidleitung) fluidisch verbunden und weist ein von dem Fluid (z. B. von einer Teilmenge des Fluids) einnehmbares Ausgleichsvolumen auf. Je nach Betriebszustand kann das Fluid bzw. die entsprechende Teilmenge des Fluids im Ausgleichsvolumen auch aufgenommen sein. Bevorzugt soll zwischen dem Fluidbehälter und dem Ausgleichsvolumen somit ein Fluidaustausch möglich sein.

Hierbei ist vorgesehen, dass das Ausgleichsvolumen zur Anpassung eines Drucks des Fluids im Fluidbehälter veränderbar (z. B. vergrößerbar und/oder verkleinerbar) ist. Erfolgt beispielsweise eine äußere Druckbeaufschlagung des Fluidbehälters (z. B. durch ein swellingbedingtes Ausdehnen einer am Fluidbehälter anliegenden Batteriezelle) kann einem starken Anstieg des Drucks des Fluids (und damit einem auf die anliegende Batteriezelle wirkenden Gegendruck) auf vorteilhafte Weise dadurch entgegengewirkt werden, dass z. B. durch eine Vergrößerung des Ausgleichsvolumens ein Teil des Fluids vom Fluidbehälter in das Ausgleichsvolumen verdrängt werden kann. Hierdurch kann auf vorteilhafte Weise die Ausdehnung des Fluidbehälters und damit die auf den Fluidbehälter wirkende Druckbelastung (und damit wiederum auf die anliegende Batteriezelle wirkenden Gegendruck) reduziert werden. Entsprechend kann im Fall einer Abnahme einer Vorspannung im Batteriezellenstapel (z. B. durch eine starke Entladung der Batteriezellen) z. B. durch eine Verkleinerung des Ausgleichsvolumens auf vorteilhafte Weise Fluid in den Fluidbehälter zurückgedrängt bzw. das Fluid (zusätzlich) druckbeaufschlagt werden, wodurch auf eine am Fluidbehälter anliegende Batteriezelle ein (zusätzlicher) Druck ausgeübt werden kann, welcher vorzugsweise die Abnahme der Vorspannung kompensiert. Insgesamt kann durch die durch die Veränderung des Ausgleichsvolumens vermittelte Fluidverlagerung zwischen Fluidbehälter und Ausgleichsvolumen auf vorteilhafte Weise ein bedarfsgerechtes Variieren der Ausdehnung der Vorrichtung (quasi ein "Atmen") ermöglicht werden und damit der Druck bzw. die Vorspannkraft auf die Batteriezellen des Batteriezellenstapels in einem für die jeweiligen Batteriezellen möglichst optimalen Bereich gehalten werden. Ein weiterer Vorteil ist auch, dass die Vorrichtung (z. B. über eine darin enthaltene Flüssigkeit mit hoher Wärmekapazität) als eine thermische Barriere bzw. als passiver Brandschutz wirken kann, wodurch z. B. im Falle eines Durchgehens einer der Batteriezellen eine thermische Propagation im Batteriezellenstapel möglichst vermieden werden kann.

Nach einem Aspekt kann die Ausgleichskammer eine bewegbare (z. B. verschiebbare) und/oder verformbare (z. B. komprimierbare) Begrenzung aufweisen, die das Ausgleichsvolumen zumindest abschnittsweise begrenzt. Bevorzugt ist die Begrenzung dabei reversibel bewegbar und/oder reversibel verformbar. Lediglich beispielhaft kann die Begrenzung in Form eines Kolbens, einer Trennmembran und/oder in Form einer Grenzfläche zu einem weiteren Fluid, vorzugsweise einem komprimierbaren Gas, ausgebildet sein. Vorzugsweise ist vorgesehen, dass das Ausgleichsvolumen durch eine Bewegung und/oder Verformung der Begrenzung veränderbar ist. Auf vorteilhafte Weise kann dadurch der Druck des Fluids im Fluidbehälter angepasst werden.

Gemäß einem weiteren Aspekt kann die Vorrichtung ferner eine, vorzugsweise steuerbare, Ausgleichseinrichtung aufweisen, die ausgebildet ist, die Begrenzung, vorzugsweise aktiv, zu bewegen und/oder zu verformen. Mittels der Ausgleichseinrichtung kann somit vorzugsweise das vom Fluid einnehmbare Ausgleichsvolumen gezielt verändert werden. Lediglich beispielhaft kann die Ausgleichseinrichtung dazu einen Hubzylindermechanismus umfassen. Bevorzugt weist die Vorrichtung dabei auch eine Steuereinrichtung (z. B. ein Steuergerät) auf, die zur Ansteuerung der Ausgleichseinrichtung ausgebildet ist. Beispielsweise kann die Ausgleichseinrichtung entsprechende Stellglieder bzw. Aktoren (z. B. Piezoaktoren) umfassen, die bevorzugt ausgebildet sind, elektrischen Signale (z. B. von der Steuereinrichtung) in eine Bewegung oder Kraft umzusetzen. Auf vorteilhafte Weise kann dadurch der Druck des Fluids und damit die Verspannung des Batteriezellenstapels aktiv angepasst werden.

Nach einem weiteren Aspekt kann die Ausgleichskammer ein Rückstellmittel (z. B. ein elastisches Element, wie z. B. ein Federelement) umfassen. Das Rückstellmittel kann dabei ausgebildet sein, bei einer Veränderung, vorzugsweise bei einer Vergrößerung, des Ausgleichsvolumens eine rückstellende Kraft auf die Begrenzung auszuüben. Entsprechend kann bei einem Druckanstieg des Fluids bzw. einer dadurch bewirkten Veränderung des Ausgleichsvolumens ein Aufbau von Spannenergie im Rückstellmittel erfolgen. Das Rückstellmittel kann dabei z. B. als ein elastisches Element, wie z. B. ein Schaumpolster und/oder ein Federelement (z. B. eine Schraubenfeder und/oder eine Gummifeder), sein. Zudem oder alternativ kann das Rückstellmittel auch als ein Gasvolumen (z. B. als Teil einer Luft- oder Gasdruckfeder) ausgebildet sein. Auf vorteilhafte Weise kann dadurch auch bei Fluidverlagerungen in der Vorrichtung eine ausreichende Vorspannung im Batteriezellenstapel sichergestellt werden, wobei über die Auslegung des Rückstellmittels (z. B. dessen Federkonstante) auf vorteilhafte Weise das Druckentlastungsverhalten der Vorrichtung insgesamt anpassbar ist.

Gemäß einem weiteren Aspekt kann die Begrenzung durch eine Druckbeaufschlagung durch das Fluid bewegbar und/oder verformbar sein. Bevorzugt ist die Begrenzung und damit der Druck des Fluids auch ohne ein gezieltes Eingreifen von außen veränderbar. D. h. die Begrenzung kann somit selbsttätig bzw. vermittelt durch einen Druckanstieg im Fluid bewegbar (z. B. verschiebbar) und/oder verformbar (z. B. komprimierbar) sein. Bevorzugt ist die Begrenzung dabei durch eine Druckbeaufschlagung durch das Fluid bei einem Überschreiten einer vorbestimmten Druckgrenze bewegbar und/oder verformbar. Auf vorteilhafte Weise kann dadurch eine passive Regulierung des Drucks des Fluids und damit der Verspannung des Batteriezellenstapels ermöglicht werden.

Zudem oder alternativ kann die Begrenzung auch in unmittelbaren Kontakt mit dem Fluid stehen. Beispielsweise kann das Ausgleichsvolumen dazu vollständig mit dem Fluid gefüllt sein. Zudem oder alternativ kann die Begrenzung über das Fluid mit dem Fluidbehälter, vorzugsweise fluidisch, gekoppelt sein. Beispielsweise kann eine Änderung (z. B. der Druckverhältnisse) im Fluidbehälter eine Änderung (z. B. der Form und/oder Lage) der Begrenzung bewirken. Bevorzugt ist die Begrenzung über das Fluid mit dem Fluidbehälter dabei derart gekoppelt, dass die Begrenzung durch eine Druckbeaufschlagung des Fluidbehälters verformbar und/oder komprimierbar ist. Vorzugsweise soll somit eine Druckbeaufschlagung des Fluidbehälters (über das Fluid) an die Begrenzung weitergebbar sein.

Nach einem weiteren Aspekt können der Fluidbehälter und die Ausgleichskammer als ein geschlossenes Fluidsystem ausgebildet sein. Entsprechend soll vorzugsweise kein Stoffaustausch (z. B. mit der Umgebung) möglich sein. Dem Fluidsystem sollen somit bevorzugt keine Stoffe von außen zuführbar (z. B. Fluid nachfüllbar) sein, noch sollen vorzugsweise Stoffe (z. B. in der Ausgleichskammer vorhandenes Gas) nach außen abführbar sein. Bevorzugt soll die dabei ggf. vorhandene Fluidverbindung der Vorrichtung zwischen Fluidbehälter und Ausgleichskammer ebenfalls Teil des geschlossenen Fluidsystems sein. Zudem oder alternativ können auch weitere optionale Komponenten der Vorrichtung (z. B. weitere Fluidbehälter) Teil des geschlossenen Fluidsystems sein.

Zudem oder alternativ kann der Fluidbehälter und die Ausgleichskammer (und ggf. die Fluidverbindung) jeweils einen Innenraum aufweisen, die mit einem Außenraum der Vorrichtung nicht verbindbar sein kann. Der Fluidbehälter und die Ausgleichskammer (und ggf. die Fluidverbindung) sollen somit bevorzugt jeweils frei von Ventilen und/oder Öffnungen nach außen ausgeführt sein.

Zudem oder alternativ kann das Fluid nicht aus der Vorrichtung ausleitbar ist und/oder kein weiteres Fluid in die Vorrichtung einleitbar sein. Insgesamt können dadurch die Batteriezellen des Batteriezellenstapels vor einem Kontakt mit Stoffen aus der Vorrichtung möglichst geschützt werden.

Gemäß einem weiteren Aspekt kann das Fluid druckbeaufschlagt sein. Beispielsweise kann der Druck des Fluids größer sein als in der umgebenden Atmosphäre. Bevorzugt ist das Fluid hierbei mit einem Druck von zumindest 0.5 MPa, besonderes bevorzugt mit einem Druck von zumindest 1 MPa druckbeaufschlagt.

Nach einem weiteren Aspekt kann der Grundkörper ein (z. B. geschlossener) Halterahmen sein. Dabei kann der Fluidbehälter z. B. in dem Halterahmen eingefasst sein.

Zudem oder alternativ kann der Grundkörper auch im Wesentlichen rechteckig und/oder vierseitig sein.

Zudem oder alternativ kann der Grundkörper den Fluidbehälter umfangsseitig (z. B. vollständig) umgeben. Der Fluidbehälter kann somit z. B. in einer Ebene vom Grundkörper umschlossen sein. Auf vorteilhafte Weise kann dadurch insgesamt eine sichere Fixierung des Fluidbehälters sichergestellt werden.

Gemäß einem weiteren Aspekt kann der Fluidbehälter als (z. B. kissenförmiger) Beutel oder Kissen ausgebildet sein. Beispielsweise kann der Fluidbehälter ein hohler, dünnwandiger, und/oder leicht verformbarer Gegenstand sein.

Zudem oder alternativ kann der Fluidbehälter zwei Membranen umfassen, die auch als erste und zweite Membran bezeichnet werden können. Die zwei Membranen können dabei durch das Fluid voneinander beanstandet sein. Bevorzugt stehen die zwei Membranen hierbei jeweils auf zwei einander entgegengesetzten Seiten vom Grundkörper (z. B. ausbauchend) ab. Lediglich beispielhaft kann die erste Membran auf einer Vorderseite der Vorrichtung und die zweite Membran auf einer Rückseite der Vorrichtung angeordnet sein.

Zudem oder alternativ kann der Fluidbehälter eine erste Anlagefläche zur Anlage einer Batteriezelle des Batteriezellenstapels aufweisen. Beispielsweise kann die erste Anlagefläche vom Grundkörper vorstehen. Weiterhin kann der Fluidbehälter eine zweite Anlagefläche zur Anlage einer weiteren Batteriezelle des Batteriezellenstapels aufweisen. Bevorzugt ist die zweite Anlagefläche dabei zur ersten Anlagefläche entgegengesetzt. Beispielsweise kann die erste Anlagefläche auf einer Vorderseite der Vorrichtung und die zweite Anlagefläche auf einer Rückseite der Vorrichtung angeordnet sein.

Zudem oder alternativ kann der Fluidbehälter zumindest auf zwei einander entgegengesetzten Seiten druckbeaufschlagbar sein. Vorzugsweise ist der Fluidbehälter dabei von zwei einander entgegengesetzten Seiten deformierbar (z. B. flachpressbar). Auf vorteilhafte Weise kann dadurch insgesamt eine möglichst effektive Kraft- bzw. Druckaufnahme von der Vorrichtung bzw. dem Fluidbehälter erreicht werden.

Nach einem weiteren Aspekt kann die Ausgleichskammer an und/oder im Grundkörper angeordnet sein. Beispielsweise kann die Ausgleichskammer als eine Aussparung und/oder ein Kanal im Grundkörper ausgebildet sein. Bevorzugt kann die Ausgleichskammer vollständig vom Material des Grundkörpers umgeben sein und/oder von außen nicht sichtbar sein. Hierbei kann die Ausgleichskammer mäanderförmig verlaufen. Zudem oder alternativ kann die Ausgleichskammer den Fluidbehälter umfangsseitig mehrseitig umgebend verlaufen. Beispielsweise kann die Ausgleichskammer, z. B. falls der Grundkörper als (Halte-)Rahmen ausgeführt ist, sich entlang mehrerer Seiten des (Halte-)Rahmens erstrecken. Auf vorteilhafte Weise kann dadurch eine möglichst kompakte Vorrichtung realisiert werden, die dadurch möglichst platzsparend in den Batteriezellenstapel integriert werden kann.

Gemäß einem weiteren unabhängigen Aspekt wird ein Batteriemodul bereitgestellt. Bevorzugt ist das Batteriemodul ein Batteriemodul für ein Kraftfahrzeug (z. B. für einen PKW oder ein Nutzfahrzeug). Das Batteriemodul weist dabei einen, vorzugsweise verspannten, Batteriezellenstapel aus mehreren entlang einer Stapelrichtung gestapelten Batteriezellen (z. B. Lithium-lonen-Batteriezellen) auf. Beispielsweise können die Batteriezellen jeweils prismatische Batteriezellen und/oder Pouch-Batteriezellen sein. Weiterhin weist das Batteriemodul eine Vorrichtung, wie in diesem Dokument beschrieben ist, auf. Auf vorteilhafte Weise kann dadurch ein druckbedingter Verschleiß der Batteriezellen (z. B. infolge eines Swellens der Batteriezellen) reduziert werden. Weiterhin kann durch, dass die Ausdehnung der Batteriezellen durch ein Deformieren der Fluidbehälter ausgeglichen werden kann, ein möglichst "swellingneutrales" Batteriemodul bereitgestellt werden.

Nach einem Aspekt kann die Vorrichtung zwischen zwei Batteriezellen des Batteriezellenstapels angeordnet sein. Bevorzugt liegen die zwei Batteriezellen somit nicht unmittelbar aneinander an, sondern werden durch die Vorrichtung zur Druckentlastung voneinander beabstandet. Entsprechend kann die Vorrichtung in diesem Zusammenhang auch als Separatorvorrichtung bezeichnet werden. Weiterhin ist bevorzugt vorgesehen, dass jede der zwei Batteriezellen am Fluidbehälter anliegt. Auf vorteilhafte Weise kann dadurch von der Vorrichtung von zwei Seiten eine Druckbelastung, z. B. infolge einer swellingbedingten Ausdehnung der Batteriezellen, aufgenommen werden.

Gemäß einem weiteren Aspekt kann das Batteriemodul und/oder die Vorrichtung mindestens einen weiteren Grundkörper (z. B. einen weiteren Halterahmen) aufweisen. Dieser kann bspw. gleich zum vorgenannten Grundkörper ausgebildet sein. Der mindestens eine weitere Grundkörper kann dabei die im Zusammenhang mit dem Grundkörper beschriebenen Merkmale aufweisen. Weiterhin kann das Batteriemodul und/oder die Vorrichtung mindestens einen weiteren formflexiblen Fluidbehälter (z. B. einen weiteren Beutel und/oder ein weiteres Kissen) aufweisen, der am mindestens einen weiteren Grundkörper angebracht (z. B. angeklebt und/oder angeschweißt) sein kann. Auch der mindestens eine weitere formflexible Fluidbehälter kann die im Zusammenhang mit dem formflexiblen Fluidbehälter beschriebenen Merkmale aufweisen. Beispielsweise kann der mindestens eine weiteren formflexible Fluidbehälter zumindest abschnittsweise eine biegsame, dehnbare, deformierbare und/oder elastische Wandung aufweisen. Der mindestens eine weitere formflexible Fluidbehälter kann mit der Ausgleichskammer (z. B. dem Ausgleichsvolumen) der Vorrichtung (z. B. über eine Fluidverbindung) fluidisch verbunden sein und somit (ebenfalls) mit dem Fluid gefüllt sein. Weiterhin kann der mindestens eine weitere formflexible Fluidbehälter auch mit dem Fluidbehälter (z. B. über die Fluidverbindung oder die Ausgleichskammer) fluidisch verbunden sein. Insgesamt kann die Vorrichtung damit mehrere (z. B. über die Fluidverbindung) miteinander fluidisch gekoppelte Fluidbehälter aufweisen, die jeweils an einem zugehörigen Grundkörper angebracht sein können. Durch diese Kopplung kann auf vorteilhafte Weise das Fluidsystem vergrößert werden und damit die Möglichkeit des Abpufferns von lokalen Belastungen verbessert werden. Ferner ermöglicht die Kopplung eine effektive Mehrfachnutzung der Ausgleichskammer bzw. des Ausgleichsvolumens zur Anpassung des Drucks des Fluids in mehreren Fluidbehältern.

Nach einem weiteren Aspekt kann der mindestens eine weitere formflexible Fluidbehälter zwischen zwei weiteren Batteriezellen des Batteriezellenstapels angeordnet sein. Bevorzugt ist der mindestens eine weitere formflexible Fluidbehälter zwischen den zwei weiteren Batteriezellen des Batteriezellenstapels derart angeordnet, dass jede der zwei weiteren Batteriezellen am mindestens einen weiteren formflexiblen Fluidbehälter anliegt. Beispielsweise kann eine der zwei weiteren Batteriezellen an einer ersten Anlagefläche des mindestens einen weiteren formflexiblen Fluidbehälters anliegen und eine zweite der zwei weiteren Batteriezellen an einer zweiten Anlagefläche des mindestens einen weiteren formflexiblen Fluidbehälters anliegen, wobei die zweite Anlagefläche vorzugsweise entgegensetzt zur ersten Anlagefläche orientiert ist.

Zudem oder alternativ kann der mindestens eine weitere formflexible Fluidbehälter auch durch zumindest eine Batteriezelle des Batteriezellenstapels von dem formflexiblen Fluidbehälter beabstandet sein. Beispielsweise kann zwischen dem formflexiblen Fluidbehälter und dem mindestens einen weiteren formflexiblen Fluidbehälter zumindest eine Batteriezelle des Batteriezellenstapels angeordnet sein. Insgesamt kann dadurch auf vorteilhafte Weise eine über den Batteriezellenstapel verteilte Druckentlastung bereitgestellt werden.

Ferner betrifft die vorliegende Offenbarung ein Kraftfahrzeug (z. B. einen LKW), wobei das Kraftfahrzeug ein Batteriemodul, wie in diesem Dokument offenbart ist, und/oder eine Vorrichtung, wie in diesem Dokument offenbart ist, aufweist. Bevorzugt handelt es sich bei dem Kraftfahrzeug dabei um ein Nutzfahrzeug, d. h. ein Kraftfahrzeug, das durch seine Bauart und Einrichtung speziell zum Transport von Gütern und/oder zum Ziehen eines oder mehrerer (z. B. landwirtschaftlicher) Anhängerfahrzeuge ausgelegt ist. Beispielsweise kann das Nutzfahrzeug ein Lastkraftwagen, ein Sattelschlepper, ein Baustellenfahrzeug und/oder eine landwirtschaftliche Maschine (z. B. ein Traktor) sein.

Die zuvor beschriebenen Aspekte und Merkmale der Erfindung sind beliebig miteinander kombinierbar. Weitere Einzelheiten und Vorteile der Erfindung werden im Folgenden unter Bezugnahme auf die beigefügten Zeichnungen beschrieben. Es zeigen:
- Figur 1: eine schematische Darstellung eines Batteriemoduls gemäß einer Ausführungsform
- Figur 2A: eine schematische Darstellung einer Vorrichtung zur Druckentlastung für einen Batteriezellenstapel gemäß einer Ausführungsform;
- Figur 2B: eine schematische Darstellung einer Vorrichtung zur Druckentlastung für einen Batteriezellenstapel gemäß einer weiteren Ausführungsform;
- Figur 2C: eine schematische Detaildarstellung einer Ausgleichskammer einer Vorrichtung zur Druckentlastung für einen Batteriezellenstapel gemäß einer Ausführungsform;
- Figur 3: eine schematische Darstellung einer Vorrichtung zur Druckentlastung für einen Batteriezellenstapel gemäß einer weiteren Ausführungsform;
- Figur 4: eine schematische Darstellung eines Batteriemoduls gemäß einer weiteren Ausführungsform; und
- Figur 5: eine schematische Darstellung einer Vorrichtung zur Druckentlastung für einen Batteriezellenstapel gemäß einer weiteren Ausführungsform.

Die in den Figuren gezeigten Ausführungsformen stimmen zumindest teilweise überein, sodass ähnliche oder identische Teile mit den gleichen Bezugszeichen versehen sind und zu deren Erläuterung auch auf die Beschreibung der anderen Ausführungsform bzw. Figuren verwiesen wird, um Wiederholungen zu vermeiden.

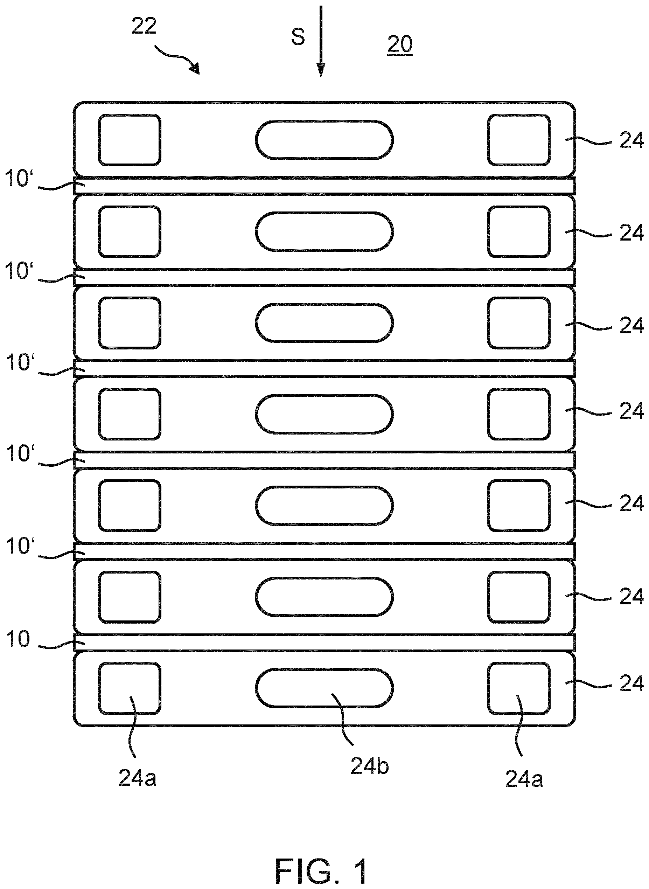

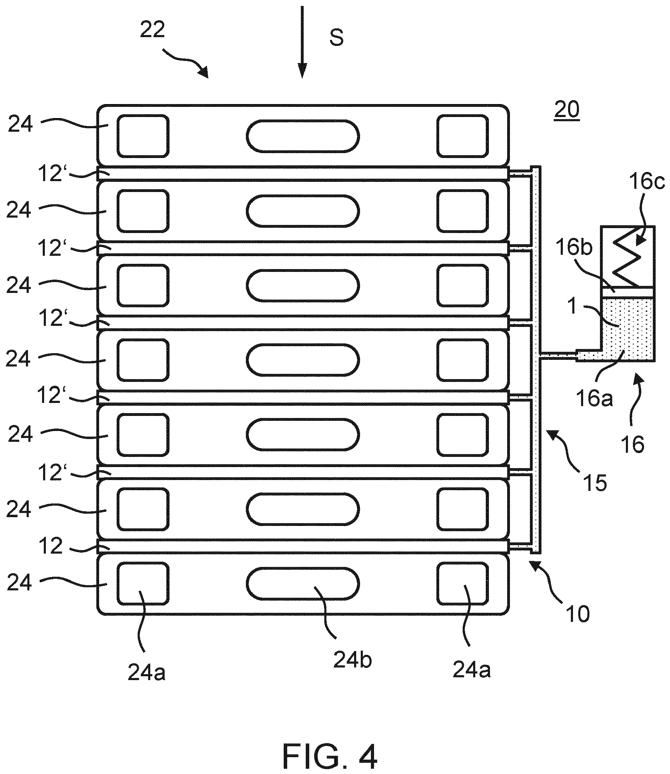

Die Figur 1 und 4 zeigen jeweils ein Batteriemodul 20 für ein Kraftfahrzeug (nicht gesondert dargestellt) gemäß Ausführungsbeispielen der vorliegenden Offenbarung. Bevorzugt ist das Kraftfahrzeug als ein Lastkraftwagen ausgeführt. Es ist auch möglich, dass das Kraftfahrzeug beispielsweise als ein Omnibus, eine Baumaschine, eine Landmaschine oder ein Personenkraftwagen ausgebildet (Pkw) ist.

Das Batteriemodul 20 kann elektrische Energie für mindestens eine elektrische Antriebseinheit zum Antreiben des Kraftfahrzeugs bereitstellen. Beispielsweise kann das Kraftfahrzeug mittels eines zentralen Elektroantriebs, mittels mehrerer Elektroradnabenantriebe oder mehrerer radnaher Elektroantriebe angetrieben sein. Das Batteriemodul 20 kann als ein Hochvolt-Batteriemodul ausgeführt sein. Das Hochvolt-Batteriemodul kann z. B. mit einer Gleichspannung zwischen 60 V und 1,5 kV, besonders bevorzugt zwischen 400 V und 850 V, betrieben werden bzw. betreibbar sein. Das Batteriemodul 20 kann extern über ein an einer Ladesteckdose des Kraftfahrzeugs angeschlossenes elektrisches Ladekabel aufladbar sein.

Das Batteriemodul 20 weist einen Batteriezellenstapel 22 aus mehreren entlang einer Stapelrichtung S gestapelten (z. B. prismatischen) Batteriezellen 24 auf. Lediglich beispielhaft kann der Batteriezellenstapel 22 fünfzehn oder sechzehn Batteriezellen 24 umfassen. Die mehreren Batteriezellen 24 können z. B. Lithium-lonen-Batteriezellen sein. Bevorzugt sind die mehreren Batteriezellen 24 jeweils gleich ausgebildet. Die mehreren Batteriezellen 24 können miteinander verspannt bzw. vorgespannt sein.

Die mehreren Batteriezellen 24 können jeweils Kontaktpole 24a (z. B. einen Pluspol und einen Minuspol) aufweisen. Aus Gründen der Übersichtlichkeit sind dabei vorliegend nicht alle Kontaktpole 24a in den Figuren separat referenziert. Die Kontaktpole 24a der mehreren Batteriezellen 24 des Batteriezellenstapels 22 können z. B. jeweils auf einer Oberseite der Batteriezellen 24 angeordnet sein bzw. nach oben orientiert sein. Weiterhin können die mehreren Batteriezellen 24 jeweils ein Überdruckventil 24b aufweisen, die ebenfalls aus Gründen der Übersichtlichkeit vorliegend nicht jeweils einzeln referenziert sind. Die jeweiligen Überdruckventile 24b können z. B. in Form einer Sollbruchstelle bzw. Materialschwächung in einer Umhausung der jeweiligen Batteriezellen 24 ausgebildet sein. Die Sollbruchstelle bzw. Materialschwächung kann selbsttätig bei Überschreiten eines Druckschwellenwertes im Inneren der Batteriezelle 24 öffnen. Die jeweiligen Überdruckventile 24b können jeweils zwischen zwei Kontaktpole 24a einer Batteriezelle 24 angeordnet sein.

Das Batteriemodul 20 kann ferner eine Halteeinrichtung aufweisen (nicht dargestellt), welche den Batteriezellenstapel 22, vorzugsweise verspannt, zusammenhält. Mittels der Halteeinrichtung kann der Batteriezellenstapel 22 somit, vorzugsweise verspannt, gehaltert sein. Die Halteeinrichtung kann bspw. in Form eines Halterahmens ausgebildet sein. Die Halteeinrichtung kann zwei, vorzugsweise gleich ausgebildete, Endplatten (nicht dargestellt) umfassen. Die Endplatten können jeweils an einander entgegengesetzten Enden bzw. Stirnseiten des Batteriezellenstapels 22 angeordnet sein. Die Endplatten können den Batteriezellenstapel 22 somit jeweils stirnseitig begrenzen. Beispielsweise kann eine der zwei Endplatten an einer ersten Stirnseite des Batteriezellenstapels 22 angeordnet sein. Weiterhin kann eine weitere der zwei Endplatten an einer zweiten Stirnseite des Batteriezellenstapels 22 angeordnet sein. Die Endplatten können angeordnet und/oder ausgebildet sein, eine entlang der Stapelrichtung S auftretende (z. B. durch ein Swelling der Batteriezellen 24 des Batteriezellenstapels 22 bedingte) Druckbeaufschlagung aufzunehmen. Der Ausdruck "Swelling" kann dabei vorzugsweise ein mit zunehmender Anzahl an Lade- bzw. Entladezyklen (irreversibles) Zunehmen des Batteriezellenvolumens der Batteriezellen 24 bezeichnen.

Weiterhin weist das Batteriemodul 20 eine Vorrichtung 10 zur Druckentlastung für den Batteriezellenstapel 22 auf. Bevorzugt dient die Vorrichtung 10 zur Druckentlastung bei einer swellingbedingten Ausdehnung der Batteriezellen 24 des Batteriezellenstapels 22. Die Vorrichtung 10 kann dabei zwischen zwei Batteriezellen 24 des Batteriezellenstapels 22 angeordnet sein. Die zwei Batteriezellen 24 können somit über die Vorrichtung 10 voneinander beabstandet sein. Beispielsweise kann die Vorrichtung 10 an einer Seitenfläche einer ersten Batteriezelle 24 des Batteriezellenstapels 22 und an einer Seitenfläche einer zweiten Batteriezelle 24 des Batteriezellenstapels 22 anliegen. Weiterhin kann das Batteriemodul 20 - wie beispielhaft in Figur 1 dargestellt ist - weitere Vorrichtungen 10` zur Druckentlastung aufweisen. Bevorzugt sind die Vorrichtung 10 und die weiteren Vorrichtungen 10` gleich ausgebildet. Auch die weiteren Vorrichtungen 10` können jeweils zwischen zwei Batteriezellen 24 des Batteriezellenstapels 22 angeordnet sein. Entsprechend kann das Batteriemodul 20 entlang der Stapelrichtung S eine alternierende Abfolge aus Batteriezellen 24 und Vorrichtungen 10, 10' aufweisen. Hierbei kann vorgesehen sein, dass (wie beispielhaft in Figur 1 gezeigt) zwischen den entsprechenden Vorrichtungen 10, 10' jeweils eine Batteriezelle 24 angeordnet ist. Alternativ können zwischen den Vorrichtungen 10, 10' auch jeweils mehrere (z. B. zwei oder drei) Batteriezellen 24 angeordnet sein.

Weiterhin ist es auch möglich, dass die Vorrichtung 10 bzw. eine der weiteren Vorrichtungen 10` zwischen einer Batteriezelle 24 und einer der Endplatten angeordnet ist. Ferner kann das Batteriemodul 20 auch ein Gehäuse umfassen und die Vorrichtung 10 bzw. eine der weiteren Vorrichtungen 10` zwischen dem Gehäuse und einer Batteriezelle 24 (z. B. der vordersten oder hintersten Batteriezelle) angeordnet sein.

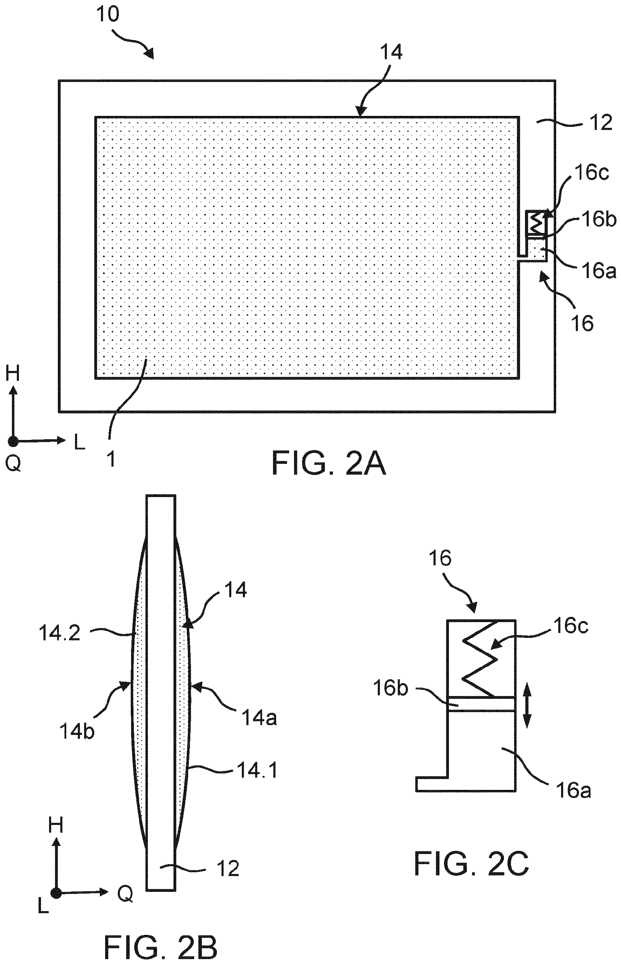

Die vorgenannte Vorrichtung 10 zur Druckentlastung weist einen Grundkörper 12, z. B. aus Kunststoff, Stahl und/oder einer Aluminiumlegierung, auf (siehe z. B. Figuren 2A, 2B, 3 und 5). Der Grundkörper 12 kann ein Profilelement sein. Der Grundkörper 12 kann formstabil sein. Der Grundkörper 12 kann im Wesentlichen rahmenförmig sein. Beispielsweise kann der Grundkörper 12 im Wesentlichen mehreckrahmenförmig (z. B. rechteckrahmenförmig) sein. Der Grundkörper 12 kann einen, vorzugsweise geschlossenen, mehrseitigen (z. B. vierseitigen) Rahmen bilden. Weiterhin kann der Grundkörper 12 im Wesentlichen plan sein. Der Grundkörper 12 kann entlang der Stapelrichtung S eine geringere Ausdehnung aufweisen als senkrecht zur Stapelrichtung S. Beispielhaft kann der Grundkörper 12 eine im Wesentlichen quaderförmige Kontur aufweisen. Bevorzugt ist der Grundkörper 12 mit einer elektrisch nicht leitfähigen Beschichtung versehen.

Weiterhin weist die Vorrichtung 10 einen formflexiblen Fluidbehälter 14 auf, der am Grundkörper 12 angebracht ist. Beispielsweise kann der Fluidbehälter 14 am Grundkörper 12 befestigt, z. B. angeklebt und/oder angeschweißt, sein. Der Fluidbehälter 14 kann dabei zumindest abschnittsweise biegsam, dehnbar und/oder elastisch sein. Die Form des Fluidbehälter 14 kann somit, z. B. infolge äußerer Druckeinwirkung, veränderbar sein. Die Fluidbehälter 14 kann, vorzugsweise reversibel, deformierbar sein. Der Fluidbehälter 14 kann dünnwandig ausgebildet sein. Der Fluidbehälter 14 kann einen Behälterinnenraum begrenzen. Der Fluidbehälter 14 kann z. B. aus Kunststoff und/oder Gummi gefertigt sein. Der Fluidbehälter 14 kann Folien, wie z. B. Kunststofffolien, metallisierte Folien und/oder Metallfolien, umfassen. Bevorzugt ist der Fluidbehälter 14 elektrisch nicht leitfähig ausgebildet und/oder mit einer elektrisch nicht leitfähigen Beschichtung versehen.

Ferner ist vorgesehen, dass der Fluidbehälter 14 mit einem Fluid 1 (z. B. einer dielektrischen Flüssigkeit) gefüllt ist. Der Fluidbehälter 14 kann hierzu fluiddicht ausgebildet sein. Beispielsweise kann der Fluidbehälter 14 als Beutel ausgebildet sein. Der Fluidbehälter 14 bzw. der Beutel kann tütenförmig und/oder kissenförmig ausgebildet sein. Der Fluidbehälter 14 bzw. der Beutel kann zumindest eine Membran umfassen. Die zumindest eine Membran kann formflexibel ausgebildet sein. Bevorzugt umfasst die zumindest eine Membran zwei Membranen 14.1 und 14.2 (vgl. Figur 2B). Die zwei Membranen 14.1 und 14.2 können durch das Fluid 1 voneinander beanstandet sein. Die zwei Membranen 14.1 und 14.2 können über eine umlaufende Klebe- und/oder Schweißnaht miteinander verbunden sein. Die zwei Membranen 14.1 und 14.2 können jeweils auf zwei einander entgegengesetzten Seiten vom Grundkörper 12, vorzugsweise ausbauchend, abstehen.

Der Fluidbehälter 14 kann eine erste Anlagefläche 14a zur Anlage einer der mehreren Batteriezelle 24 des Batteriezellenstapels 22 aufweisen. Beispielsweise kann die Membran 14.1 die erste Anlagefläche 14a umfassen. An der ersten Anlagefläche 14a kann z. B. eine erste Batteriezelle des Batteriezellenstapels 22 anliegen. Der Fluidbehälter 14 bzw. die erste Anlagefläche 14a kann, z. B. durch ein Swelling der ersten Batteriezelle, deformierbar (z. B. flachpressbar) sein. Weiterhin kann der Fluidbehälter 14 eine, vorzugsweise zur ersten Anlagefläche 14a entgegengesetzte, zweite Anlagefläche 14b zur Anlage einer weiteren Batteriezelle der mehreren Batteriezellen 24 des Batteriezellenstapels 22 aufweisen. Beispielsweise kann die Membran 14.2 die zweite Anlagefläche 14b umfassen. An der zweiten Anlagefläche 14b kann z. B. eine zweite Batteriezelle des Batteriezellenstapels 22 anliegen. Der Fluidbehälter 14 bzw. die zweite Anlagefläche 14b kann, z. B. durch ein Swelling der zweiten Batteriezelle, deformierbar (z. B. flachpressbar) sein. Insgesamt kann der Fluidbehälter 14 zumindest auf zwei einander entgegengesetzten Seiten, vorzugsweise in Stapelrichtung S, druckbeaufschlagbar sein.

In einer bevorzugten Ausführungsform kann der Fluidbehälter 14 in den Grundkörper 12 eingespannt sein. Beispielsweise kann der Grundkörper 12 zwei Halbschalen umfassen, zwischen welchen der Fluidbehälter 14 aufgenommen (z. B. eingeklemmt) ist. Zudem oder alternativ kann der Fluidbehälter 14 am Grundkörper 12 auch angeklebt, angeschweißt und/oder anderweitig fixiert sein. Der Fluidbehälter 14 kann vom Grundkörper 12 umfangseitig (z. B. vollständig) umgeben sein. Beispielsweise kann der Grundkörper 12 den Fluidbehälter 14 umlaufen und/oder umranden. Der Grundkörper 12 kann den Fluidbehälter 14 senkrecht zur Stapelrichtung S allseitig begrenzen. Weiterhin kann der Fluidbehälter 14 in einer, vorzugsweise mittig am Grundkörper 12 angeordneten, Öffnung bzw. Aussparung aufgenommen sein.

Wie vorstehend bereits erwähnt, ist der Fluidbehälter 14 mit einem Fluid 1 gefüllt. Bevorzugt ist das Fluid 1 dabei eine Flüssigkeit. Lediglich beispielhaft kann das Fluid 1 bzw. die Flüssigkeit deionisiertes Wasser und/oder Öl (z. B. Mineralöl oder Silikonöl) sein. Das Fluid 1 kann jedoch auch ein Gel und/oder ein Gas sein. Bevorzugt ist das Fluid 1 ein dielektrisches Fluid, d. h. ein vorzugsweise elektrisch schwach leitendes oder nicht leitendes Fluid. Weiterhin kann das Fluid 1 druckbeaufschlagt sein. Beispielsweise kann das Fluid 1 mit einem Druck von zumindest 0.5 MPa, vorzugsweise mit einem Druck von zumindest 0.7 MPa, besonders bevorzugt mit einem Druck von zumindest 1 MPa beaufschlagt sein. Dazu kann das Fluid 1 unter einem entsprechenden Druck in den Fluidbehälter 14 eingefüllt und dieser anschließend verschlossen werden. Der Fluidbehälter 14 kann ferner im Wesentlichen vollständig mit dem Fluid 1 gefüllt sein.

Die Vorrichtung 10 weist ferner eine, vorzugsweise geschlossene, Ausgleichskammer 16 auf (siehe z. B. Detaildarstellung in Figur 2C). Die Ausgleichskammer 16 ist bevorzugt ein vom Fluidbehälter 14 separates Bauteil. Die Ausgleichskammer 16 kann einen Ausgleichskammerinnenraum begrenzen. Die Ausgleichskammer 16 ist mit dem Fluidbehälter 14 (z. B. über eine Fluidverbindung 15) fluidisch verbunden. Die Ausgleichskammer 16 weist ein vom Fluid 1 (z. B. von einer Teilmenge des Fluids 1) einnehmbares oder miteingenommenes Ausgleichsvolumen 16a auf. Das Ausgleichsvolumen 16a kann dabei ein Teilbereich des Ausgleichskammerinnenraums sein. Das Ausgleichsvolumen 16a kann ausgebildet sein, Fluid, das, z. B. durch eine Druckbeaufschlagung des Fluidbehälters 14, aus dem Fluidbehälter 14 verdrängt wurde, aufzunehmen. Bevorzugt soll somit das Fluid 1 bzw. eine Teilmenge des Fluids 1 vom Fluidbehälter 14 (z. B. über die Fluidverbindung 15) zum Ausgleichsvolumen 16a fließen können und umgekehrt. Entsprechend kann das Ausgleichsvolumen 16a mit dem Fluidbehälter 14 bzw. dem Fluidbehälterinnenraum (z. B. über die Fluidverbindung 15) fluidisch verbunden sein. Das Ausgleichsvolumen 16a kann dabei auch (z. B. vollständig) mit dem Fluid 1 bzw. eine Teilmenge des Fluids 1 ausgefüllt sein.

Das Ausgleichsvolumen 16a ist zur Anpassung des Drucks des Fluids 1 im Fluidbehälter 14, vorzugsweise reversibel, veränderbar (z. B. vergrößerbar und verkleinerbar). Bevorzugt ist das Ausgleichsvolumen 16a hierbei stufenlos bzw. kontinuierlich veränderbar. Beispielsweise kann das Ausgleichsvolumen 16a zwischen einer ersten (z. B. minimalen) Größe und einer, vorzugsweise von der ersten Größe unterschiedlichen, zweiten (z. B. maximalen) Größe, vorzugsweise reversibel, veränderbar sein.

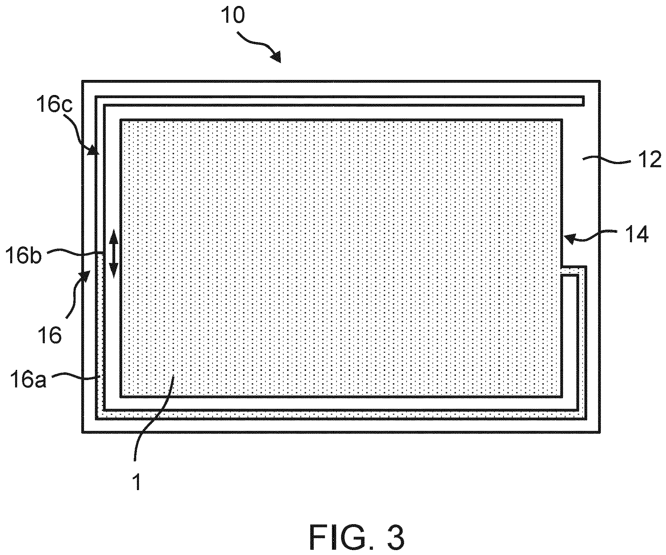

Hierzu kann die Ausgleichskammer 16 eine variierbare Begrenzung 16b aufweisen, die das Ausgleichsvolumen 16a zumindest abschnittsweise begrenzt. Beispielsweise kann die Begrenzung 16b bewegbare (z. B. verschiebbar und/oder verfahrbar) sein. Zudem oder alternativ kann die Begrenzung 16b auch verformbare (z. B. komprimierbar und/oder expandierbar) sein. Bevorzugt ist die Begrenzung 16b dabei reversibel variierbar (z. B. reversibel bewegbar und/oder reversibel verformbar). Lediglich beispielhaft kann die Begrenzung 16b in Form eines Kolbens (vgl. Figur 2C), einer Trennmembran, eines deformierbaren Körpers und/oder in Form einer Grenzfläche (vgl. Figur 3) zu einem weiteren Fluid, vorzugsweise einem komprimierbaren Gas, ausgebildet sein. Die Begrenzung 16b kann somit auch eine Phasengrenze zwischen dem Fluid 1 und einem weiteren Fluid (z. B. Luft) sein. Die Begrenzung 16b kann in unmittelbaren Kontakt mit dem Fluid 1 stehen. Entsprechend kann das Ausgleichsvolumen 16a vollständig mit dem Fluid 1 gefüllt sein. Durch eine Bewegung und/oder Verformung der Begrenzung kann das Ausgleichsvolumen 16a veränderbar sein. Lediglich beispielhafte kann das Ausgleichsvolumen 16a in den Figuren 2A, 2C, 4 und 5 durch ein Bewegen der beispielhaft als Kolben ausgebildeten Begrenzung 16b vergrößert und/oder verkleinert werden. Ebenso kann das Ausgleichsvolumen 16a in Figur 3 durch ein Bewegen der beispielhaft als Luft-Fluid-Grenzfläche ausgebildeten Begrenzung 16b vergrößert und/oder verkleinert werden, was z. B. durch ein Komprimieren und/oder Expandieren des entsprechenden Luftvolumens erfolgen kann.

Ein Verändern des Ausgleichsvolumens 16a bzw. ein Variieren der Begrenzung 16b kann dabei grundsätzlich sowohl aktiv (z. B. gesteuert) als auch passiv (z. B. selbsttätig) erfolgen.

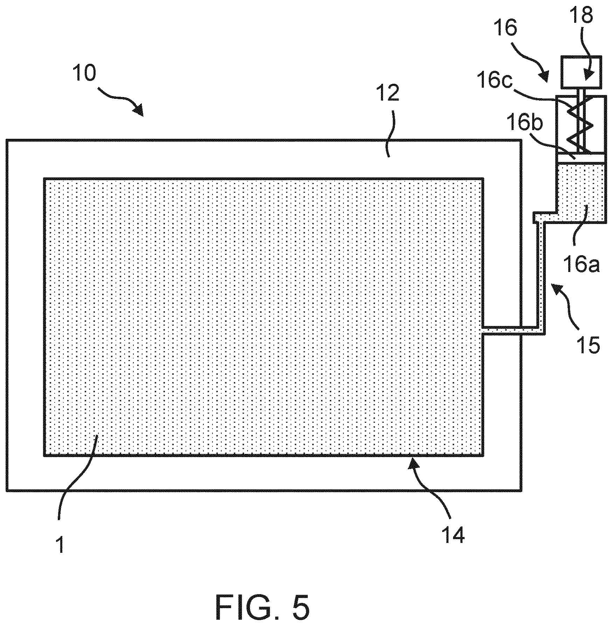

Beispielsweise kann die Vorrichtung eine (z. B. steuerbare) Ausgleichseinrichtung 18 aufweisen, die ausgebildet ist, die Begrenzung 16b zu variieren (z. B. zu bewegen und/oder zu verformen). Bevorzugt ist die Ausgleichseinrichtung 18 ausgebildet, die Begrenzung 16b aktiv bzw. gezielt (z. B. mittels entsprechender Stellglieder) zu variieren. Die Ausgleichseinrichtung 18 kann in der Ausgleichskammer 16 angeordnet sein. Die Ausgleichseinrichtung 18 kann ausgebildet sein, durch ein Variieren der Begrenzung 16b das vom Fluid 1 einnehmbare Ausgleichsvolumen 16a zu verändern. Lediglich beispielhaft kann die Ausgleichseinrichtung 18 dazu einen Hubzylindermechanismus umfassen (vgl. Figur 5). Dieser kann ausgebildet sein, die als Kolben ausgebildete Begrenzung 16b mittels eines pneumatischen, hydraulischen und/oder elektrischen Linearantriebs zu bewegen. In der in Figur 3 gezeigten Ausführungsform kann die Ausgleichseinrichtung 18 z. B. ausgebildet sein, (z. B. durch eine steuerbare elektrische Heizung) die Temperatur des Luftvolumens und damit dessen Volumen zu variieren. Die Vorrichtung 10 kann ferner eine Steuereinrichtung (nicht dargestellt) aufweisen, die zur Ansteuerung der Ausgleichseinrichtung 18 ausgebildet ist. Beispielsweise kann die Ausgleichseinrichtung 18 entsprechende Stellglieder bzw. Aktoren (z. B. Piezoaktoren) aufweisen, die bevorzugt ausgebildet sind, elektrischen Signale (z. B. von der Steuereinrichtung) in eine Bewegung oder Kraft umzusetzen.

Weiterhin kann die Begrenzung 16b (z. B. selbsttätig) durch eine Druckbeaufschlagung durch das Fluid 1 variierbar (z. B. bewegbar und/oder verformbar) sein. Die Begrenzung 16b kann somit auch ohne ein gesteuertes Eingreifen von außen variierbar sein. Beispielsweise kann die Begrenzung 16b selbsttätig bzw. vermittelt durch eine Druckänderung im Fluid 1 bewegbar (z. B. verschiebbar und/oder verfahrbar) und/oder verformbar (z. B. komprimierbar und/oder expandierbar) sein. Beispielsweise kann in der Figur 3 dargestellten Ausführungsform die Begrenzung 16b bei einem Druckanstieg im Fluid 1 durch Komprimierung des Luftvolumens variierbar sein. In einer möglichen Variante kann die Begrenzung 16b durch eine Druckbeaufschlagung durch das Fluid 1 erst bei einem Überschreiten einer vorbestimmten, d. h. zuvor festgelegten, Druckgrenze variierbar sein.

Bevorzugt ist vorgesehen, dass die Begrenzung 16b über das Fluid 1 mit dem Fluidbehälter 14 (z. B. fluidisch) gekoppelt ist. Entsprechend kann die Vorrichtung 10 ausgebildet sein, dass eine Änderung (z. B. der Druckverhältnisse) im Fluidbehälter 14 eine Änderung (z. B. der Form und/oder Lage) der Begrenzung 16b bewirkt. Beispielsweise kann die Begrenzung 16b und der Fluidbehälter 14 - über das Fluid 1 - gemäß dem hydrostatischen Prinzip gekoppelt sein. Bevorzugt ist die Begrenzung 16b über das Fluid 1 mit dem Fluidbehälter 14 derart gekoppelt, dass die Begrenzung 16b durch eine (z. B. durch ein Swellen der Batteriezellen 24 bedingte) Druckbeaufschlagung des Fluidbehälters 14 verformbar und/oder komprimierbar ist.

Weiterhin kann die Ausgleichskammer 16 ein Rückstellmittel 16c umfassen. Das Rückstellmittel 16c kann dabei ausgebildet sein, bei einer Veränderung, vorzugsweise einer Vergrößerung, des Ausgleichsvolumens 16a eine rückstellende Kraft auf die Begrenzung 16b auszuüben. Das Rückstellmittel 16c kann dabei ein elastisches Element sein oder ein elastisches Element aufweisen. Das elastische Element kann dabei z. B. ein körperliches Bauteil sein (vgl. Figuren 2A, 2C, 4 und 5). Beispielsweise kann das elastische Element ein federnder Körper, wie z. B. ein Schaumpolster, sein. Das elastische Element kann auch ein Federelement, z. B. eine metallische Feder und/oder Gummifeder sein. Das Federelement kann bspw. eine Biegefeder, Torsionsfeder, Tellerfeder, Evolutfeder und/oder Ringfeder sein. Zudem oder alternativ kann das Rückstellmittel 16c auch ein abgeschlossenes komprimierbares Gasvolumen (vgl. Figur 3) sein oder ein abgeschlossenes komprimierbares Gasvolumen aufweisen. Das Rückstellmittel 16c kann angeordnet sein, dass bei einer (z. B. durch einen Druckanstieg des Fluids 1 induzierten) Veränderung des Ausgleichsvolumens 16a Spannenergie im Rückstellmittel 16c aufgebaut wird. Beispielsweise kann das Rückstellmittel 16c zwischen der Begrenzung 16b und einer Wandung der Ausgleichskammer 16 angeordnet sein. Das Rückstellmittel 16c kann ferner in einem Leervolumen der Ausgleichskammer 16 angeordnet sein. Im Leervolumen kann das Fluid 1 nicht aufgenommen und/oder nicht aufnehmbar sein. Das Leervolumen kann vom Ausgleichsvolumen 16a und/oder dem Fluid 1 über ein Trennelement (z. B. einen Kolben oder eine Trennmembran) abgetrennt sein. Das Leervolumen kann z. B. mit einem Gas oder einem Gasgemisch (z. B. Luft) gefüllt sein. Bevorzugt ist das Leervolumen 16b mit einem kompressiblen Medium gefüllt. Weiterhin kann das Rückstellmittel 16c jedoch auch in dem Ausgleichsvolumen 16a angeordnet sein.

Gemäß einer Variante kann die Ausgleichskammer 16 in dem Grundkörper 12 angeordnet sein (vgl. Figur 2A und 3). Die Ausgleichskammer 16 kann z. B. in den Grundkörper 12 integriert sein. Beispielsweise kann die Ausgleichskammer 16 als eine Aussparung und/oder ein Kanal im Grundkörper 12 ausgebildet sein. Die Ausgleichskammer 16 kann somit nicht zerstörungsfrei vom Grundkörper 12 lösbar sein. Die Ausgleichskammer 16 kann von außen nicht sichtbar und/oder zugänglich sein. Die Ausgleichskammer 16 kann somit nicht im direkten Kontakt mit Batteriezellen 24 des Batteriezellenstapels 22 stehen. Die Ausgleichskammer 16 kann auch am Grundkörper 12 angeordnet sein. Beispielsweise kann die Ausgleichskammer 16 angrenzend, d. h. im unmittelbaren Kontakt, zum Grundkörper 12 am Grundkörper 12 angeordnet sein. Die Ausgleichskammer 16 kann ferner mäanderförmig verlaufen. Zudem oder alternativ kann die Ausgleichskammer 16 den Fluidbehälter 14 umfangsseitig mehrseitig umgebend verlaufen (vgl. Figur 3). Beispielsweise kann sich die Ausgleichskammer 16 entlang mehrerer Seiten des Fluidbehälters 14 erstrecken. Die Ausgleichskammer 16 kann den Fluidbehälter 14 (z. B. umfangsseitig) zumindest abschnittsweise umgebend angeordnet sein. Die Ausgleichskammer 16 kann in und/oder an einem dem Fluidbehälter 14 umfangsseitig umgebenden Bereich des Grundkörpers 12 angeordnet sein. Die Ausgleichskammer 16 kann sich im Wesentlichen in einer Ebene senkrecht zur Stapelrichtung S erstrecken.

Weiterhin kann die Ausgleichskammer 16 und der Fluidbehälter 14 (sowie die ggf. vorhandene Fluidverbindung 15) als ein geschlossenes Fluidsystem ausgebildet sein. Entsprechend können die Ausgleichskammer 16, der Fluidbehälter 14 und/oder die ggf. vorhandene Fluidverbindung 15 jeweils (nach außen) fluiddicht ausgeführt sein und vorzugsweise keinen Stoffaustausch mit der Umgebung ermöglichen. Dem Fluidsystem sollen somit bevorzugt keine Stoffe von außen zuführbar (z. B. zusätzliches Fluid nachfüllbar) sein, noch sollen vorzugsweise Stoffe (z. B. in der Ausgleichskammer 16 vorhandenes Gas) nach außen abführbar sein. Der Fluidbehälterinnenraum und der Ausgleichskammerinnenraum sollen somit bevorzugt nicht mit dem Außenraum bzw. der Umgebung der Vorrichtung 10 verbunden oder verbindbar sein. Entsprechend können der Fluidbehälter 14, die Ausgleichskammer 16 und die ggf. vorhandene die Fluidverbindung 15 jeweils frei von Ventilen und/oder Öffnungen nach außen (z. B. Nachfüll- und/oder Überdruckventile) ausgeführt sein.

In einer weiteren Variante kann die Ausgleichskammer 16 auch beabstandet vom Grundkörper 12 angeordnet sein (vgl. Figuren 4 und 5). Die Ausgleichskammer 16 kann bspw. als ein vom Grundkörper 12 separates Bauteil ausgeführt sein. Die Ausgleichskammer 16 kann dabei auch vom Batteriezellenstapel 22 beabstandet sein. Die Ausgleichskammer 16 kann somit nicht unmittelbar an eine Batteriezelle 24 angrenzen und/oder anliegen. Beispielsweise kann die Ausgleichskammer 16 über die Fluidverbindung 15 vom Grundkörper 12 getrennt angeordnet sein. Diese Variante ist hierbei besonders vorteilhaft, falls die Vorrichtung 10 bzw. das Batteriemodul 20 mehrere miteinander fluidisch gekoppelte Fluidbehälter 14 und 14' umfasst, was nachfolgend eingehender beschrieben werden wird.

Gemäß einer Ausführungsform kann die Vorrichtung 10 und/oder das Batteriemodul 20 mindestens einen weiteren Grundkörper 12' aufweisen. Der mindestens einen weiteren Grundkörper 12' kann dabei grundsätzlich wie der vorstehend beschriebene Grundkörper 12 der Vorrichtung 10 ausgebildet sein. Beispielsweise kann auch der mindestens eine weitere Grundkörper 12' als Halterahmen ausgebildet sein. Der Grundkörper 12 und der mindestens einen weiteren Grundkörper 12' können dabei gleich oder aber auch unterschiedlich ausgeführt sein.

Weiterhin kann die Vorrichtung 10 und/oder das Batteriemodul 20 mindestens einen weiteren formflexiblen Fluidbehälter 14` (z. B. einen weiteren Beutel und/oder ein weiteres Kissen) aufweisen, der am mindestens einen weiteren Grundkörper 12' angebracht (z. B. angeklebt und/oder angeschweißt) sein kann. Auch der mindestens eine weitere formflexible Fluidbehälter 14` kann dabei grundsätzlich wie der vorstehend beschriebene formflexible Fluidbehälter 14 der Vorrichtung 10 ausgebildet sein. Dabei können wiederum auch der mindestens eine weitere formflexible Fluidbehälter 14' und der formflexible Fluidbehälter 14 gleich oder aber unterschiedlich ausgeführt sein. Weiterhin können, wie bspw. in Figur 4 dargestellt ist, sowohl der mindestens eine weitere Grundkörper 12` mehrere (z. B. fünf) weitere Grundkörper 12' als auch der mindestens eine weitere formflexible Fluidbehälter 14` mehrere (z. B. fünf) weitere formflexible Fluidbehälter 14' aufweisen, wobei jeweils einer der mehreren weiteren formflexiblen Fluidbehälter 14' an einem der mehreren weiteren Grundkörper 12' angebracht sein kann.

Der mindestens eine weitere formflexible Fluidbehälter 14' kann dabei mit der Ausgleichskammer 16 und/oder dem Fluidbehälter 14 (z. B. über eine Fluidverbindung 15) fluidisch verbunden sein. Entsprechend kann der mindestens eine weitere formflexible Fluidbehälter 14' (ebenfalls) mit dem Fluid 1 gefüllt sein. Der mindestens eine weitere formflexible Fluidbehälter 14' und die Ausgleichskammer 16 und/oder der Fluidbehälter 14 können, z. B. über die Fluidverbindung 15, miteinander fluidisch gekoppelt sein. Das Ausgleichsvolumen 16a kann ausgebildet sein, Fluid, das - z. B. durch eine Druckbeaufschlagung des mindestens einen weiteren formflexiblen Fluidbehälters 14' - aus dem mindestens einen weiteren formflexiblen Fluidbehälter 14' verdrängt wurde, aufzunehmen. Bevorzugt soll somit das Fluid 1 bzw. eine Teilmenge des Fluids 1 vom mindestens einen weiteren formflexiblen Fluidbehälter 14` (z. B. über die Fluidverbindung 15) zum Ausgleichsvolumen 16a fließen können und umgekehrt. Entsprechend kann das Ausgleichsvolumen 16a mit dem mindestens einen weiteren formflexiblen Fluidbehälter 14' bzw. dessen Innenraum fluidisch verbunden sein.

Ferner kann auch der mindestens eine weitere formflexible Fluidbehälter 14' zusammen mit dem formflexiblen Fluidbehälter 14 und der Ausgleichskammer 16 (und mit der ggf. vorhandenen Fluidverbindung 15) ein geschlossenes Fluidsystem bilden. Entsprechend können die Ausgleichskammer 16, der Fluidbehälter 14, der mindestens eine weitere formflexible Fluidbehälter 14' und/oder die ggf. vorhandene Fluidverbindung 15 jeweils (nach außen) fluiddicht ausgeführt sein und vorzugsweise keinen Stoffaustausch mit der Umgebung ermöglichen. Dem Fluidsystem sollen somit bevorzugt keine Stoffe von außen zuführbar (z. B. zusätzliches Fluid nachfüllbar) sein, noch sollen vorzugsweise Stoffe (z. B. in der Ausgleichskammer 16 vorhandenes Gas) nach außen abführbar sein.

Weiterhin kann der mindestens eine weitere formflexible Fluidbehälter 14' bzw. der mindestens eine weitere Grundkörper 12' zwischen zwei weiteren Batteriezellen 24 des Batteriezellenstapels 22 angeordnet sein. Die zwei weiteren Batteriezellen 24 des Batteriezellenstapels 22 können somit nicht unmittelbar aneinander anliegend angeordnet sein, sondern durch den mindestens einen weiteren formflexiblen Fluidbehälter 14' voneinander beabstandet werden. Bevorzugt ist dabei der mindestens eine weitere formflexible Fluidbehälter 14' zwischen den zwei weiteren Batteriezellen 24 des Batteriezellenstapels 22 derart angeordnet, dass jede der zwei weiteren Batteriezellen 24 am mindestens einen weiteren formflexiblen Fluidbehälter 14' anliegt. Beispielsweise kann eine der zwei weiteren Batteriezellen 24 an einer ersten Anlagefläche (nicht dargestellt) des mindestens einen weiteren formflexiblen Fluidbehälters 14' anliegen und eine zweite der zwei weiteren Batteriezellen 24 an einer zweiten Anlagefläche (nicht dargestellt) des mindestens einen weiteren formflexiblen Fluidbehälters 14' anliegen, wobei die zweite Anlagefläche vorzugsweise entgegensetzt zur ersten Anlagefläche orientiert ist. Beispielsweise kann die erste Anlagefläche auf einer Vorderseite des mindestens einen weiteren formflexiblen Fluidbehälters 14' und die zweite Anlagefläche auf einer Rückseite des mindestens einen weiteren formflexiblen Fluidbehälters 14' angeordnet sein.

Abschließen sei erwähnt, dass das Batteriemodul 20 zum Überbrücken etwaiger Lücken zwischen den (gestapelten) Batteriezellen 24 und dem Fluidbehälter 14 bzw. zwischen den (gestapelten) Batteriezellen 24 und dem mindestens einen weiteren formflexiblen Fluidbehälter 14` optional (nicht dargestellte) Lückenfüller zwischen den entsprechenden Komponenten aufweisen kann. Diese Lückenfüller können dabei jeweils z. B. eine Matte oder ein Kissen, insbesondere eine Elastomermatte oder ein Elastomerkissen, beispielsweise ein so genanntes Gappad, zum Beispiel aus einem TIM-Material (Englisch: Thermal Interface Material) ausgebildet sein.

Obwohl die Erfindung unter Bezugnahme auf bestimmte Ausführungsbeispiele beschrieben worden ist, ist es für einen Fachmann ersichtlich, dass verschiedene Änderungen ausgeführt werden können und Äquivalente als Ersatz verwendet werden können, ohne den Bereich der Erfindung zu verlassen. Folglich soll die Erfindung nicht auf die offenbarten Ausführungsbeispiele begrenzt sein, sondern soll alle Ausführungsbeispiele umfassen, die in den Bereich der beigefügten Patentansprüche fallen. Insbesondere beansprucht die Erfindung auch Schutz für den Gegenstand und die Merkmale der Unteransprüche unabhängig von den in Bezug genommenen Ansprüchen. Insbesondere sollen dabei die vorstehend vorrangig im Zusammenhang mit dem Batteriemodul beschrieben Merkmale des mindestens einen weiteren Grundkörpers und des mindestens einen weiteren formflexiblen Fluidbehälters auch unabhängig vom Batteriemodul als Teil der Vorrichtung offenbart und beanspruchbar sein.

### Bezugszeichenliste

- 1: Fluid
- 10: Vorrichtung zur Druckentlastung
- 10`: Weitere Vorrichtung zur Druckentlastung
- 12: Grundkörper
- 12': Weiterer Grundkörper
- 14: Fluidbehälter
- 14: Weiteren Fluidbehälter
- 14a: erste Anlagefläche
- 14b: zweite Anlagefläche
- 14.1, 14.2: Membran
- 15: Fluidverbindung
- 16: Ausgleichskammer
- 16a: Ausgleichsvolumen
- 16b: Begrenzung
- 16c: Rückstellmittel
- 18: Ausgleichseinrichtung
- 20: Batteriemodul
- 22: Batteriezellenstapel
- 24: Batteriezellen
- 24a: Kontaktpol
- 24b: Überdruckventil
- H: Hochachse
- L: Längsachse
- Q: Querachse
- S: Stapelrichtung

## Patentansprüche

1. Vorrichtung (10) zur Druckentlastung für einen Batteriezellenstapel (22) aus mehreren entlang einer Stapelrichtung (S) gestapelten Batteriezellen (24), vorzugsweise zur Druckentlastung bei einer swellingbedingten Ausdehnung der Batteriezellen (24) des Batteriezellenstapels (22), aufweisend:
einen, vorzugsweise rahmenförmigen, Grundkörper (12);
einen formflexiblen Fluidbehälter (14), der am Grundkörper (12) angebracht ist und der mit einem Fluid (1), vorzugsweise einer dielektrischen Flüssigkeit, gefüllt ist; und
eine Ausgleichskammer (16), die mit dem Fluidbehälter (14) fluidisch verbunden ist und die ein von dem Fluid (1) einnehmbares Ausgleichsvolumen (16a) aufweist, wobei das Ausgleichsvolumen (16a) zur Anpassung eines Drucks des Fluids (1) im Fluidbehälter (14) veränderbar ist.

2. Vorrichtung (10) nach Anspruch 1, wobei:
die Ausgleichskammer (16) eine, vorzugsweise reversibel, bewegbare und/oder verformbare Begrenzung (16b) aufweist, die das Ausgleichsvolumen (16a) zumindest abschnittsweise begrenzt.

3. Vorrichtung (10) nach Anspruch 2, ferner aufweisend:
eine steuerbare Ausgleichseinrichtung (18), vorzugsweise ein Hubzylindermechanismus, wobei die Ausgleichseinrichtung (18) ausgebildet ist, die Begrenzung (16b) zu bewegen und/oder zu verformen.

4. Vorrichtung (10) nach Anspruch 2 oder 3, wobei:
die Ausgleichskammer (16) ein Rückstellmittel (16c), vorzugsweise ein elastisches Element, umfasst, wobei das Rückstellmittel (16c) ausgebildet ist, bei einer Vergrößerung des Ausgleichsvolumens (16a) eine rückstellende Kraft auf die Begrenzung (16b) auszuüben.

5. Vorrichtung (10) nach einem der Ansprüche 2 bis 4, wobei die Begrenzung (16b):
a) durch eine Druckbeaufschlagung durch das Fluid (1) bewegbar und/oder verformbar ist, vorzugsweise bei einem Überschreiten einer vorbestimmten Druckgrenze; und/oder
b) in unmittelbaren Kontakt mit dem Fluid (1) steht; und/oder
c) über das Fluid (1) mit dem Fluidbehälter (14) fluidisch gekoppelt ist, vorzugsweise derart, dass die Begrenzung (16b) durch eine Druckbeaufschlagung des Fluidbehälters (14) verformbar und/oder komprimierbar ist.

6. Vorrichtung (10) nach einem der vorherigen Ansprüche, wobei:
a) der Fluidbehälter (14) und die Ausgleichskammer (16) als ein geschlossenes Fluidsystem ausgebildet sind; und/oder
b) der Fluidbehälter (14) und die Ausgleichskammer (16) jeweils einen Innenraum aufweisen, die mit einem Außenraum der Vorrichtung (10) nicht verbindbar sind; und/oder
c) das Fluid (1) nicht aus der Vorrichtung (10) ausleitbar ist und/oder kein weiteres Fluid in die Vorrichtung (10) einleitbar ist.

7. Vorrichtung (10) nach einem der vorherigen Ansprüche, wobei das Fluid (1) druckbeaufschlagt ist, vorzugsweise mit einem Druck von zumindest 0.5 MPa, besonderes bevorzugt mit einem Druck von zumindest 1 MPa.

8. Vorrichtung (10) nach einem der vorherigen Ansprüche, wobei der Grundkörper (12):
a) ein, vorzugsweise geschlossener, Halterahmen ist; und/oder
b) rechteckig und/oder vierseitig ist; und/oder
c) den Fluidbehälter (14) umfangsseitig, vorzugsweise vollständig, umgibt.

9. Vorrichtung (10) nach einem der vorherigen Ansprüche, wobei der Fluidbehälter (14):
a) als, vorzugsweise kissenförmiger, Beutel ausgebildet ist; und/oder
b) zwei Membranen (14.1, 14.2) umfasst, die durch das Fluid (1) voneinander beanstandet sind, und vorzugsweise jeweils auf zwei einander entgegengesetzten Seiten vom Grundkörper (12) ausbauchend abstehen; und/oder
c) eine erste Anlagefläche (14a) zur Anlage einer Batteriezelle (24) des Batteriezellenstapels (22) und eine, vorzugsweise zur ersten Anlagefläche (14a) entgegengesetzte, zweite Anlagefläche (14b) zur Anlage einer weiteren Batteriezelle (24) des Batteriezellenstapels (22) aufweist; und/oder
d) zumindest auf zwei einander entgegengesetzten Seiten druckbeaufschlagbar ist.

10. Vorrichtung (10) nach einem der vorherigen Ansprüche, wobei die Ausgleichskammer (16) an und/oder im Grundkörper (12) angeordnet ist, und vorzugsweise mäanderförmig und/oder den Fluidbehälter (14) umfangsseitig mehrseitig umgebend verläuft.

11. Batteriemodul (20) für ein Kraftfahrzeug, vorzugsweise Nutzfahrzeug, aufweisend:
einen Batteriezellenstapel (22) aus mehreren entlang einer Stapelrichtung (S) gestapelten Batteriezellen (24); und
eine Vorrichtung (10) nach einem der vorherigen Ansprüche.

12. Batteriemodul (20), nach Anspruch 11, wobei:
die Vorrichtung (10) zwischen zwei Batteriezellen (24) des Batteriezellenstapels (22) angeordnet ist, vorzugsweise derart, dass jede der zwei Batteriezellen (24) am Fluidbehälter (14) anliegt.

13. Batteriemodul (20), nach Anspruch 11 oder 12, ferner aufweisend:
mindestens einen weiteren Grundkörper (12`); und
mindestens einen weiteren formflexiblen Fluidbehälter (14'), der am mindestens einen weiteren Grundkörper (12`) angebracht ist;
wobei der mindestens eine weitere formflexible Fluidbehälter (14') mit der Ausgleichskammer (16) fluidisch verbunden ist und mit dem Fluid (1) gefüllt ist.

14. Batteriemodul (20), nach Anspruch 13, wobei der mindestens eine weitere formflexible Fluidbehälter (14'):
a) zwischen zwei weiteren Batteriezellen des Batteriezellenstapels (22) angeordnet ist, vorzugsweise derart, dass jede der zwei weiteren Batteriezellen am mindestens einen weiteren formflexiblen Fluidbehälter (14`) anliegt; und/oder
b) durch zumindest eine Batteriezelle (24) des Batteriezellenstapels (22) von dem formflexiblen Fluidbehälter (14) beabstandet ist.

15. Kraftfahrzeug, vorzugsweise Nutzfahrzeug, aufweisend ein Batteriemodul (20) nach einem der Ansprüche 11 bis 14 und/oder eine Vorrichtung nach einem der Ansprüche 1 bis 10.
